# EUROPEAN PATENT APPLICATION

(11) **EP 0 695 499 A1**
(43) Date of publication of application: **07.02.1996**
(21) Application number: 95830319.0
(22) Date of filing: 24.07.1995
(51) Int. Cl.: A01K 91/08

(54) **Fishing-line locking device, fixable to a draw wire for trolling**

(30) Priority: 04.08.1994 IT FI940153
(71) Applicant: EFFEVUEMME S.n.c. di Pieri Franco, Pieri Massimo e Pieri Vincenzo, I-50020 Montespertoli, Florence (IT); STOPPIONI S.n.c. di Stoppioni Ivo & C., I-50100 Florence (IT)
(72) Inventor: Pieri, Franco, I-50018 Scandicci (Florence) (IT); Stoppioni, Ivo, I-50100 Florence (IT)
(74) Representative: Bardini, Marco Luigi

(57) **Abstract**

Fishing-line locking device fixable to a draw wire for trolling which comprises an easy to grip body (1) having jaw means (2a, 2b) at one of its ends with two opposing locking surfaces and means for fixing the body to the draw wire at the other end. Perpendicular to the locking surfaces, a non rotating through pin (9) is provided whose ends have threading of different pitches, the one with the fine pitch (9b) engaging in a adjustment bushing (10) and the one with the coarse pitch (9c) engaging in tightening means (11) of said jaw means. Reference means (10c, 12) are provided for tightening the jaw means at a pre-established pressure. The device is fixed to the draw wire by means of a groove (13), inside which the draw wire is housed and a slider (14) elastically forcing on the draw wire and is held in a gripping position by a second slider (15) which wedges itself between the first slider (14) and the body (1) of the device.

## Description

The present invention relates to fishing-like locking device fixable to a draw wire in the practice of trolling.

In this type of fishing, the end of the fishing-line to which the fishhook is attached is kept at any depth desirable, such as close to the sea bottom, by fixing it to a boat's draw wire whose free end, provided with a weight, moves on or along the bottom of the sea, lake, river or the like.

To fix the fishing-line to the draw wire, apart from hand-crafted and improvised solutions, there are known clamps, in which the fishing-line engages, that are provided with spring-clips or equivalent means by which the fishing-line is secured to the draw wire. The clamps generally comprise two surfaces in contact with one another, usually covered in rubber or another suitable elastic material able to create a certain friction, between which the fishing-line is pressed by acting on a locking nut or a through bolt. The pressure under which the fishing-line is locked must be adjusted with a certain degree of precision, since the pressure must be great enough to assure the dragging by the wire, while not being so great that it does not detach under the impulsive traction provoked by a fish biting the hook. With the known clamps, the precise adjustment of the locking depends entirely on the experience of the user and is anything but easy since it involves the manoeuvre of nuts and bolts, which quite often are worn because of the frequency with which this operation is carried out, both when the fishing-line has to be fixed again to the draw wire after a fish has bitten, and when the fishing-line has to be changed to one of a different diameter.

Even the operations for fixing the above-mentioned clamps to the draw wire are far from being satisfactory. As a matter of fact, fixing the fishing-line by means of a ring or spring-clip or even a simple slip knot does not allow for the positioning of the end of the fishing-line other than near the sea bottom. Other systems of fixing the fishing-line, for which essentially use is made of the friction between the draw wire and the elements around which it is wrapped, do not assure a hold along the draw wire in case of strains or impacts.

The object of the present invention is to provide a device which, in trolling, makes it possible to lock the fishing-line with a simple manoeuvre and without having to use accessory tools while always assuring a correct locking pressure and allowing in any case its setting at the pressure considered most suitable.

A further object of the present invention is to provide a device of the above-mentioned type which makes it possible to easily and stably fix the fishing-line to the draw wire at any position along it.

These objectives are accomplished with the device according to the present invention which comprises an easy to grip body having jaw means at one end with two opposing locking surfaces and means for fixing itself to said draw wire at the other end. The novel feature of the device according to the invention consists in the fact that orthogonal to said locking surfaces a non rotatable through pin is provided having threaded ends of different pitch, the end having the fine pitch engaging in an adjustment bushing and the one with the coarse pitch engaging in the locking means of said jaw means, with reference means being provided for the locking of said jaw means at a pre-established pressure. In one particularly preferred embodiment, said reference means comprise a reference element on said locking means and a non rotating connection between said bushing and said jaw means suited to the positioning of said bushing in a plurality of different angular positions with respect to said jaw means chosen so that the reference element of said locking means is aligned according to the longitudinal axis of said body.

Preferably, the means for fixing the device to said draw wire comprise a groove-shaped seat for said draw wire formed transversally in proximity to the other end of said body, a first slider moving longitudinally inside said body and elastically forced toward said seat in a longitudinal direction, suited to close said seat and reduce the width in order to block the sliding of said draw wire inside it, a second slider, also sliding longitudinally inside said body, having a wedge-shaped portion suited to engage between said body, said first slider and a mobile wedge for engaging between said first slider and an inclined wall of said body following the sliding of said second slider toward said seat, when said first slider is gripping said draw wire.

Further characteristics and advantages of the device for locking a fishing-line and fixing it to the draw wire in trolling according to the present invention will become apparent in the following description of one of its possible embodiments, given as an example and not limitative, with reference to the attached drawings in which:
- figure 1 is a side view of the device according to the present invention;
- figure 2 is a plan view of the device of figure 1;
- figure 3 is an exploded perspective view of the device according to the invention;
- figure 4 is an enlarged side view of the device of figure 1 partially cut away in correspondence to the end for the locking of the fishing-line;
- figure 5 shows a mobile member of the jaw means from the opposite side of that shown in figure 3;
- figures 6 and 7 show the device according to the invention partially cut away in correspondence to the end for the fixing of the draw wire and in the wire release and gripping positions respectively;
- figures 8 and 9 show the corresponding side sectional views of the device in the wire release and gripping positions respectively as per figures 6 and 7.

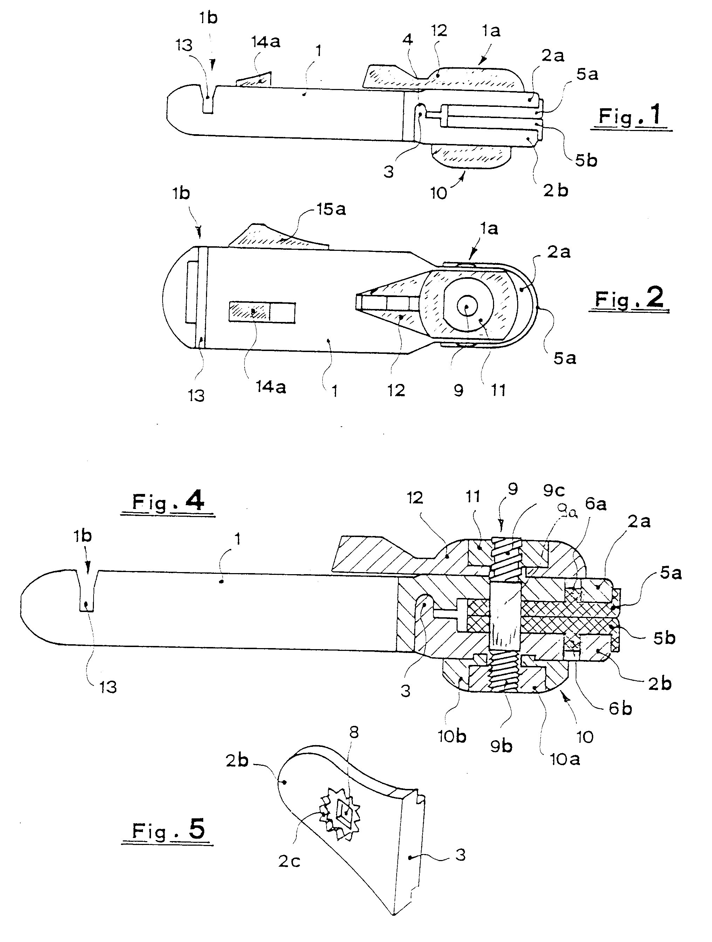

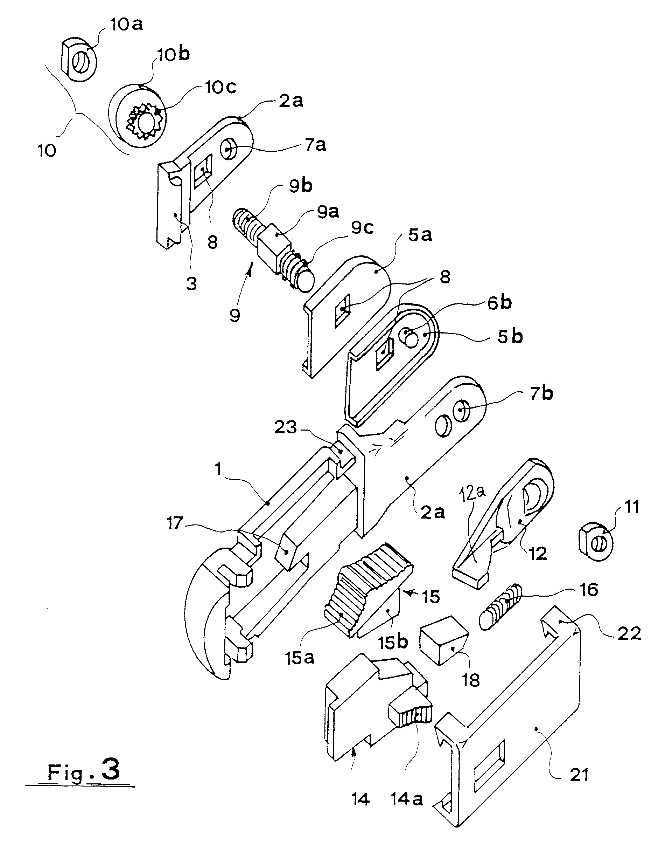

With reference to figures 1 and 2, the device according to the present invention is composed of a substantially elongated body 1 of an easy to grip form, comprised of two functionally distinct sections: the first indicated with 1a is situated at one end of body 1 and has the function of locking the fishing-line, the second, indicated with 1b, is situated at the other end of body 1 which has the function of fixing body 1 to a draw wire C.

Section 1a is composed of a fixed jaw member 2a, extending longitudinally from body 1 and of a mobile jaw member 2b pivotally engaging with a lug 3 in a semicylindrical seat 4 formed transversally to the root of fixed jaw member 2a. Jaw members 2a and 2b have two opposing faces each covered with a layer or pad of resilient material 5a, 5b, such as rubber.

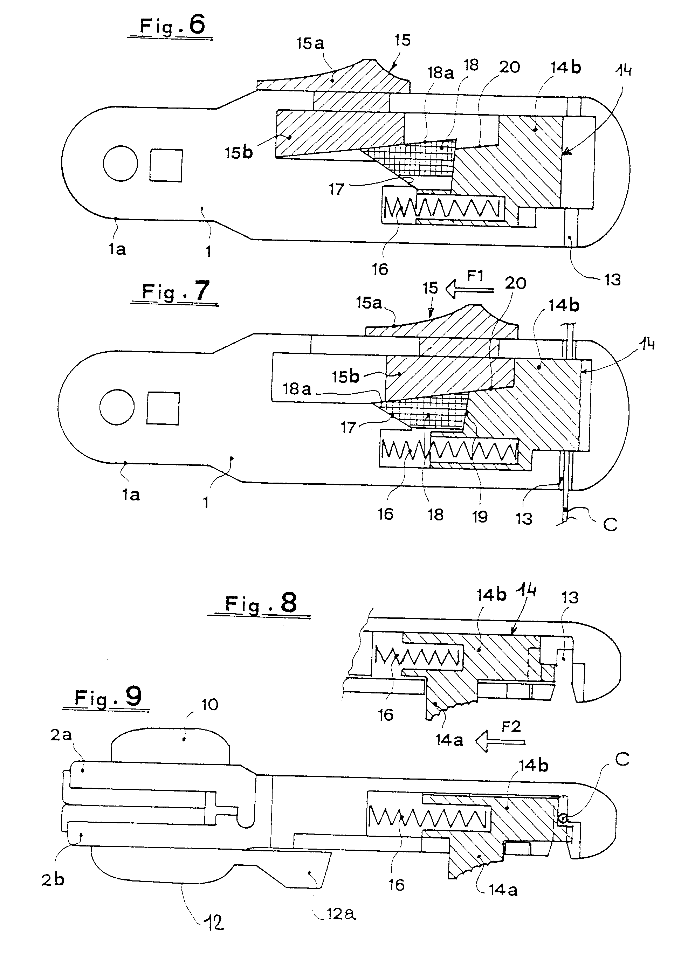

As shown also in figures 3 and 4, the two pads 5a, 5b are fixed to respective jaw members 2a, 2b by means of pegs 6a, 6b protruding from one of their faces and engaging in corresponding seats 7a, 7b formed on the jaw members themselves. Jaw members 2a, 2b and pads 5a ,5b have a square through hole 8 in which a pin generically indicated with 9 engages with its middle portion 9a having a square cross-section in order to prevent its rotation with respect to jaw members 2a, 2b. The end portions of pin 9 are threaded with two threadings of different pitch, the one with the fine pitch being indicated with 9b, and the one with the coarse pitch being indicated with 9c.

The threaded portion with the fine pitch 9b engages in an adjustment bushing generically indicated with 10 and formed by a nut 10a inside which threaded portion 9b engages, and by a ring nut 10b in which nut 10a is housed without the possibility for mutual rotation. Ring-nut 10b has, on the face turned toward jaw member 2b, a star-shaped sleeve 10c which engages in a corresponding star-shaped seat 2c formed on the face of mobile jaw member 2b on the side opposite that of square hole 8. Once pin 9 has been screwed into bushing 10 to the desired degree, the bushing 10 can be placed in as many different angular positions with respect to jaw member 2b as there are points in the profile of star-shaped seat 2c. Clearly, sleeve 10c can have a simply square profile suited to engage in star-shaped seat 2c. Alternatively, and more generically, that same result can be achieved by giving seat 2c and the relative sleeve a polygonal profile.

The threaded portion with the coarse pitch 9c of pin 9 engages with a nut 11 housed integrally inside a bushing 12 provided with a lever arm 12a extending above fixed jaw member 2a. The coarse pitch of threading 9c makes it so that with a single rotation of lever arm 12a it is possible to release the locking between the two elastic pads 5a, 5b of jaw members 2a, 2b and insert the fishing-line between them. The setting of the locking pressure is carried out by screwing pin 9 into adjustment bushing 10 to a greater or lesser degree and then locking the jaw members with lever arm 12a.

The device is supplied to the user pre-set at a pressure considered optimal for a certain diameter of fishing-line. In these conditions, lever arm 12a is aligned longitudinally on body 1. If the user wishes to correct the pre-established pressure either on the basis of personal experience or in order to use a different diameter of fishing-line, he need only dismount the device and screw or unscrew pin 9 from bushing 10 to the right point and then remount it being careful to place bushing 10 in the angular position which allows lever 12 to be longitudinally aligned at the end of the locking rotation. Lever arm 12a and the non rotating connection between the adjustment bushing and jaw means therefore constitute reference elements for positioning the device at an optimal pressure. The lever can be substituted, for example, with a rotating knob having a reference notch to be brought into correspondence with a point of reference on the jaw member.

At the other end of body 1, section 1b is provided for fixing body 1 to the draw wire. As shown in figures 1 and 2, it comprises a groove-shaped seat 13 which is formed transversally in correspondence with said end and is suited to contain the draw wire, as well as a first slider 14 sliding longitudinally inside body 1 and protruding from the front of it with a button 14a and a second slider 15 also sliding longitudinally inside body 1 and protruding from it laterally with its button 15a. As best shown in figures 6, 7, 8 and 9, the first slider 14 comprises a block 14b sliding inside body 1 and forced by means of a spring 16 into a position closing groove 13 so as to restrict its width and to block the draw wire inside it. Accidental release of the wire as a result of a strong strain on the same which could overcome the force of spring 16 is prevented by second slider 15 which comprises a block 15b in the shape of a wedge which engages between body 1 and block 14b of first slider 14 sliding with one of its inclined surfaces on the corresponding inclined surface of a substantially trapezoidal wedge 18 which, when block 14b is forced toward groove 13, becomes lodged in a seat delimited on one side by a wall 19 of block 14b, and on the other side by an inclined wall 17 of body 1.

Figures 7 and 9 show the condition in which the draw wire indicated with C is blocked in groove 13: in this condition block 15b of second slider 15 is stuck in a seat delimited by face 18a of wedge 18 which is in the same plane as the inclined face 20 of block 14b of first slider 14. To disengage wire C, one needs only push button 15a of second slider 15 in the direction of arrow F1 and then overcome the reaction of spring 16 by pushing button 14a of first slider 14 in the direction of arrow F2 of figure 8. The operation of gripping the device to the draw wire is accomplished by carrying out the above described operations in the inverse manner, i.e.placing wire C in groove 13 and then releasing button 14a and blocking, finally, the sliding of first slider 14 by wedging block 15b of second slider 15 between wedge 18 and wall 20 of insert 14b from one side and body 1 from the other.

In a simplified version of the device according to the present invention, the fishing-line looking section can be provided alone with means for fixing it to a draw wire of a conventional type.

With the device according to the present invention, the operation of gripping it to and releasing it from the draw wire which can be carried out holding the device in one hand and the wire in the other, is considerably simplified. The same occurs for the operation of locking the fishing line, for which it is no longer necessary to regulate the locking pressure to the value considered optimal each time. Furthermore, thanks to the stability with which the device is locked to the draw wire, it is possible to lock the end of the fishing-line in any position comprised between the bottom and the surface of the water and, if wanted, apply more than one fishing-line to the same draw wire at different heights.

## Claims

1. Fishing-line locking device fixable to a draw wire in the practice of trolling comprising an easy to grip body (1) having jaw means(2a,b) at one of its ends (1a) with two opposing surfaces for locking the fishing-line and means for fixing said body to said draw wire at the other end (1b), characterised in that a non-rotating through pin (9) perpendicular to said locking surfaces is provided, said pin having threaded ends (9b,9c) with different pitches, the one (9b) with the fine pitch engaging in an adjustment bushing (10), and the one (9c) with the coarse pitch engaging in means for tightening (12) said jaw means (2a,b), reference means (12a) being provided for tightening said jaw means at a pre-established pressure.

2. Device according to claim 1, wherein said reference means comprise a reference member (12a) on said tightening means (12)and a non rotating connection (9a) between said adjustemnt bushing (10) and said jaw means suited to position said bushing in a plurality of different angular positions with respect to said jaw means selected so that the reference element of said tightening means is aligned with a point of reference of said body (1).

3. Device according to the previous claims, wherein said tightening means of said jaw means (2a,b) comprise a lever (12a) rotating around said pin (9), the arm of which constitutes said reference element to be aligned according to a longitudinal axis of said body (1).

4. Device according to the previous claims, wherein said adjustment bushing (10) comprises a ring nut (10b) and a non rotating nut (10a) engaged therein, said pin (9) being engaged in said nut (10a), said non rotating connection being formed by a sleeve (10c) having a polygonal profile, suited to engage in a seat (2c) of a corresponding profile formed on said jaw means.

5. Device according to claim 1, wherein said jaw means (2a,b) comprise a fixed jaw member (2a) extending longitudinally from said body and a mobile jaw member (2b) releasably connected to said fixed jaw (2a).

6. Device according to claim 1, wherein said means for fixing body (1) to the draw wire comprise a transversal groove-shaped seat (13) for said wire formed at the other end (1b) of said body, a first slider (14) sliding inside said body and forced elastically toward said seat (13) in the axial direction, for closing said seat and reducing the width in order to block the sliding of said wire inside it, a second slider (15) also sliding inside said body and having a wedge-shaped portion (15b) for engaging between said body, said first slider (14) and a mobile wedge (18) for engaging between said first slider (14) and an inclined wall (17) of said body when said first slider is gripped to said wire.

7. Device according to claim 6, wherein said wedge (18) has a substantially trapezoidal cross section and is sliding in a seat delimited by said inclined wall (17) of said body and a wall (19) of said first slider (14), the face (18a) of said wedge (18) on which said second slider (15) slides having the same inclination of an adjacent face (20) of said first slider (14) and being aligned on the same plane with it when said first slider is gripped to the wire.

8. Device according to the previous claims, wherein the opposing faces of said jaw means are covered with a pad (5a,5b) of elastic material.
